# EUROPÄISCHE PATENTSCHRIFT

(11) **EP 0 782 697 B1**
(45) Veröffentlichungstag und Bekanntmachung des Hinweises auf die Patenterteilung: **12.09.2001**
(21) Anmeldenummer: 96927556.9
(22) Anmeldetag: 19.07.1996
(51) Int. Cl.: G01D 5/26, G01B 3/00

(54) **ANORDNUNG ZUR FORMSCHLÜSSIGEN AUFNAHME EINES MASSSTABS**
DEVICE FOR PHYSICALLY HOLDING A MEASUREMENT SCALE IN PLACE
DISPOSITIF DE FIXATION PAR LIAISON DE FORME D'UNE ECHELLE DE MESURE

(30) Priorität: 20.07.1995 DE 19526518
(43) Veröffentlichungstag der Anmeldung: 09.07.1997
(73) Patentinhaber: Dr. Johannes Heidenhain GmbH, 83301 Traunreut (DE)
(72) Erfinder: FREITAG, Hans-Joachim, D-07749 Jena (DE); BÖGE, Ludwig, D-07747 Jena (DE)
(86) Internationale Anmeldenummer: EP9603196
(87) Internationale Veröffentlichungsnummer: WO9704287

(56) Entgegenhaltungen:
- EP-A- 0 314 940
- DE-A- 3 427 027

## Beschreibung

Die Erfindung bezieht sich auf eine Anordnung zur formschlüssigen Aufnahme eines Maßstabs und ist beispielsweise für Meßeinrichtungen im Maschinenbau einsetzbar.

Aus dem Stand der Technik, beispielsweise der DE-A-34 27 027, sind zahlreiche Meßeinrichtungen bekannt, wo der Maßstab in einem längserstreckten Hohlkörper aufgenommen wird. Hier ist der Maßstab in der Regel unter Zwischenschaltung einer elastischen Zwischenschicht mit einem Hohlkörper verbunden. Die Hohlkörper sind dabei aus Leichtmetall, vorzugsweise aus Aluminium, hergestellt.

Ein mehrteiliger Hohlkörper mit einem Maßstab ist in der DE-A1-34 27 027 beschrieben. Der Hohlkörper besteht aus einem biegesteifen Träger und daran befestigten schenkelförmigen Abschirmteilen aus Blech oder Kunststoff.

In eine Vielzahl von Ausführungen, insbesondere für große Meßlängen, wird als Maßstab ein mit einer Teilung versehenes Stahlband eingesetzt, das in Nuten oder Falzen des Trägerkörpers aufgenommen wird. Eine derartige Ausführung bei der der Trägerkörper als stützendes Hohlprofil ausgeführt wird, ist aus der DE-C-27 12 421 bekannt.

Meßeinrichtungen für große Längen werden derart realisiert, daß längenmäßig günstige Teilstücke des Trägerkörpers auf ein Maschinenbauteil justiert und fixiert werden, wobei es allgemein bekannt ist, zwischen den einzelnen Teilstücken elastische Dichtungen zum Ausgleich von Wärmedehnungen anzubringen. Nach der Montage der Teilstücke des Trägerkörpers wird das Maßband in die Nut der Trägerkörper eingezogen und befestigt. Eine entsprechende praktische Ausführung mit einem Maßbandträger ist aus der Firmenschrift der Fa. Heidenhain "NC Linear Encoders" vom Juli 1994 bekannt. Hier müssen für große Meßlängen einzelne Maßbandträgerteilstücke auf dem Maschinenbauteil justiert und über Verschraubungen befestigt werden.

Alle diese Ausführungen haben den Nachteil, daß der Maßstabsträger montageaufwendig an dem Maschinenbauteil befestigt und justiert werden muß und für große Längen sehr kostenaufwendig ist.

Ausgehend von dem geschilderten Stand der Technik liegt der Erfindung die Aufgabe zugrunde, eine Anordnung zur formschlüssigen Aufnahme eines Maßstabes zur Verfügung zu stellen, mit der eine zeitsparende und aufwendige Montage des Maßstabsträgers, an beispielsweise einer Werkzeugmaschine auch für große Meßlängen, erreicht wird.

Die Aufgabe wird erfindungsgemäß bei einer gattungsgemäßen Anordnung zur formschlüssigen Aufnahme eines Maßstabes dadurch gelöst, daß die Profilschenkel aus elastischem Material und der Profilboden aus einem längsstabilen, biegbaren Material bestehen.

Gemäß einer bevorzugten Ausbildung der Erfindung besteht das längsstabile, biegbare Material aus einem Metallband.

Bei einer vorteilhaften Weiterbildung der Erfindung enthalten die Profilschenkel elastische Dichtlamellen.

Vorteilhafterweise sind die Profilschenkel mittels Selbstklebefolie mit dem Profilboden verbunden.

Es ist von Vorteil, wenn die Profilschenkel und der Profilboden von elastischen Dichtlamellen umgeben sind.

Mit der erfindungsgemäßen Lösung wird eine einfache und kostengünstige Montage eines Maßstabskörpers, bestehend aus Maßstab und Profilboden, an einer Werkzeugmaschine erreicht. Darüber hinaus ermöglicht die erfindungsgemäße Lösung einen rationellen Transport, auch im Servicefall, da der Maßstabskörper bei großen Meßlängen aufgewickelt werden kann.

Die Erfindung soll nachstehend anhand einer Prinzipdarstellung noch näher erläutert werden. Es zeigen:
- Fig. 1: eine Prinzipdarstellung der erfindungsgemäßen Anordnung
- Fig. 2 a), b), c): weitere Ausführungsformen der erfindungsgemäßen Anordnung

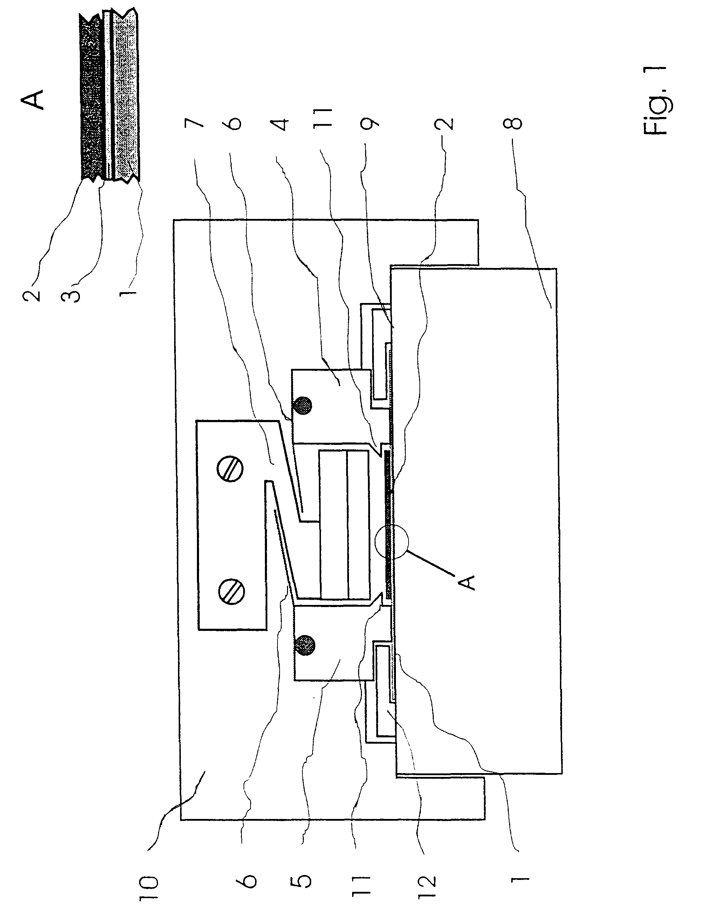

Bei der in Fig. 1 schematisch dargestellten Anordnung ist auf einem Profilboden 1, z.B. aus Stahl, ein Maßstab 2, z.B. ein Stahlmaßstab, aufgebracht. Der Maßstab 2 kann ohne eine Zwischenschicht 3 oder mit einer Zwischenschicht 3, ausgebildet als elastische Klebeschicht oder als Ölfilm, auf dem Profilboden 1 aufliegen.
Der Profilboden 1 kann z.B. aus einem Metallband bestehen. Seitlich vom Maßstab 2 sind in Längsrichtung über die Maßstabslänge zwei Profilschenkel 4, 5 aus elastischem Material, z.B. Polyurethan, angeordnet. Die Profilschenkel 4, 5 werden mittels üblicher Verbindungstechniken, z.B. durch Klebetechnik, Vulkanisierung, Anspritzung etc. oder mittels Selbstklebefolie auf dem Profilboden 1 befestigt.

Vorzugsweise sollte das Material, aus dem die Profilschenkel 4, 5 und der Profilboden 1 bestehen,eine Steifigkeit aufweisen, die das Aufwickeln auf einen Grundkörper mit einem Radius r von z.B. 20 - 40 cm Durchmesser ermöglicht.
Die schematisch dargestellte Abtasteinheit 7, die üblicherweise mit einem Schlitten 10, der die Führung der Meßeinrichtung gewährleistet, verbunden ist, gleitet in zwei in Längsrichtung angeordneten elastischen Dichtlamellen 6. Damit wird der Maßstab 2 und der Sensor der Abtasteinheit 7 vor schädlichen Umwelteinflüssen geschützt. Da der Maßstab 2 in kleinen Bereichen elastisch vom Grundkörper entkoppelt ist und sowohl die Profilschenkel als auch der Profilboden biegeschlaff sind, kann diese Gesamtanordnung, vor allem für den Einsatz bei großen Meßlängen,aufgewickelt und vorteilhaft transportiert werden. Für den Ein- bzw. Ausbau der Gesamtanordnung in/auf ein Maschinenbauteil 8 mit einer ebenen Aufnahmefläche 9 muß das System nur abgewickelt und in Ausnehmungen 12, z.B. als Falzen, ausgebildet, in Längsrichtung eingeschoben und fixiert werden.

Die an den Profilschenkeln seitlich angeordneten Falze 11 gewährleisten eine formschlüssige und weitestgehend spielfreie Aufnahme des Maßstabes 2.

Mittels einer örtlich begrenzten,nicht dargestellten, starren Klebung bzw. Arretierung wird eine feste Lagezuordnung als Fixpunkt zwischen dem Maßstab 2 und dem Profilboden geschaffen.

Dieser Fixpunkt wird vorzugsweise so gewählt, daß er mit dem hier hicht dargestellten Nullpunkt des Maschinenkoordinatensystems zusammenfällt. Ebenfalls an diesem Fixpunkt ist der Profilboden 1 mit dem Maschinenbauteil 8 fest verbunden.

Die seitliche und höhenmäßige Aufnahme und Orientierung des Maßstabs 2 kann durch eingeformte Ausnehmungen in den elastischen Profilschenkeln 4, 5 realisiert werden.

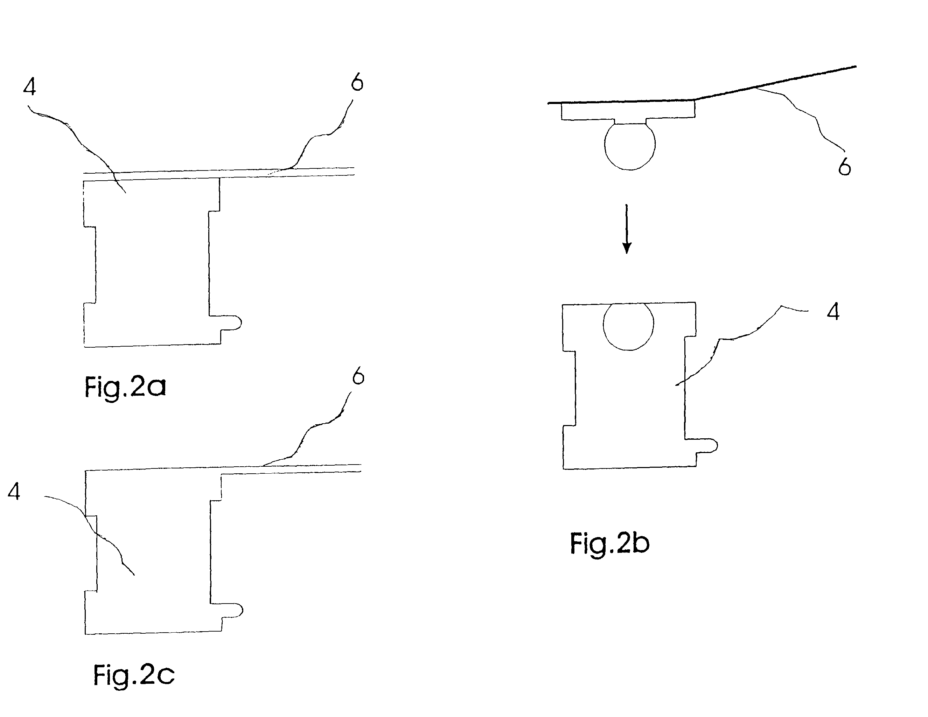

Die Fig. 2 a) bis 2 b) enthalten Ausführungsformen für die Gestaltung der elastischen Profilschenkel 4, 5 mit der Dichtlamelle 6.

Aus den Ausführungsformen 2a) und 2 c) ist zu entnehmen, daß der elastische Profilschenkel 4 und die Dichtlamelle 6 im Fall 2 c)aus einem Teil bestehen und im Fall 2a) auf bzw. an dem elastischen Profilschenkel 4 die Dichtlamelle 6 mittels üblicher Verbindungstechniken, z.B. durch Kleben, angebracht ist.

In Fig. 2 b) ist eine vorteilhafte Ausgestaltung der Erfindung dargestellt, bei der die Dichtlamelle 6 über einen Druckverschluß mit dem elastischen Profilschenkel 4 verrastbar ist.

Die elastischen Profilschenkel 5 haben entsprechend den in Fig. 1 angeordneten Profilschenkel 4, 5 und Dichtlamellen 6 den gleichen Aufbau.

## Patentansprüche

1. Anordnung zur formschlüssigen Aufnahme eines Maßstabes (2) einer Längenmeßeinrichtung, wobei die Anordnung einen Profilboden (1) sowie von diesem abstehende und mit ihm verbundene seitliche Profilschenkel (4, 5) aufweist und wobei zwischen diesen der Maßstab (2) angeordnet ist, **dadurch gekennzeichnet, daß** die Profilschenkel (4, 5) aus elastischem Material bestehen und der Profilboden (1) aus einem längsstabilen, biegbaren Material besteht.

2. Anordnung nach Anspruch 1, **dadurch gekennzeichnet**, daß das längsstabile, biegbare Material des Profilbodens (1) ein Metallband ist.

3. Anordnung nach Anspruch 1 oder 2, **dadurch gekennzeichnet**, daß die Profilschenkel (4, 5) elastische Dichtlamellen enthalten.

4. Anordnung nach einem der Ansprüche 1 bis 3, **dadurch gekennzeichnet, daß** die Profilschenkel (4, 5) mittels Selbstklebefolie mit dem Profilboden (1) verbunden sind.

5. Anordnung nach einem der Ansprüche 1 bis 4, **dadurch gekennzeichnet, daß** die Profilschenkel (4, 5) und der Profilboden (1) von elastischen Dichtlamellen (6) umgeben sind.

6. Anordnung nach einem der Ansprüche 1 bis 5, **dadurch gekennzeichnet, daß** die Steifigkeit, als Produkt von Elastizitätsmodul und Trägheitsmoment, der Profilschenkel (4, 5) und des Profilbodens (1) in Abhängigkeit von einem Aufwickelradius r festgelegt wird.

7. Anordnung nach einem der vorhergehenden Ansprüche, **dadurch gekennzeichnet**, daß der Maßstab (2) mit einer Zwischenschicht (3), ausgebildet als elastische Klebeschicht oder als Ölfilm, auf dem Profilboden aufliegt.

8. Anordnung nach einem der vorhergehenden Ansprüche, **dadurch gekennzeichnet**, daß die Profilschenkel (4, 5) und der Profilboden (1) eine Steifigkeit aufweisen, die das Aufwickeln auf einen Grundkörper mit einem Radius r von 20 bis 40 cm Durchmesser ermöglicht.

## Claims

1. Arrangement for accommodating as a form-fit a measurement scale (2) of a length measuring device, the arrangement having a profile base (1) and lateral profile members (4, 5) projecting from said base and connected thereto, and the measurement scale (2) being disposed between the latter, **characterised in that** the profile members (4, 5) consist of a resilient material and the profile base (1) consists of a longitudinally stable, flexible material.

2. Arrangement according to claim 1, **characterised in that** the longitudinally stable, flexible material of the profile base (1) is a metal strip.

3. Arrangement according to claim 1 or 2, **characterised in that** the profile members (4, 5) contain resilient sealing lamellae.

4. Arrangement according to one of claims 1 to 3, **characterised in that** the profile members (4, 5) are connected to the profile base (1) by means of self-adhesive film.

5. Arrangement according to one of claims 1 to 4, **characterised in that** the profile members (4, 5) and the profile base (1) are surrounded by resilient sealing lamellae (6).

6. Arrangement according to one of claims 1 to 5, **characterised in that** the rigidity, as the product of modulus of elasticity and moment of inertia of the profile members 14, 5) and the profile base (1), is fixed in dependence on a take-up radius r.

7. Arrangement according to one of the preceding claims, **characterised in that** the measurement scale (2) lies on the profile base with an intermediate layer (3), configured as a resilient adhesive layer or as an oil film.

8. Arrangement according to one of the preceding claims, **characterised in that** the profile members (4, 5) and the profile base (1) have a rigidity which renders possible winding onto a base body with a radius r of 20 to 40 cm diameter.

## Revendications

1. Dispositif pour le montage par complémentarité de formes d'une règle (2) d'un dispositif de mesure de longueurs, le dispositif comprenant un fond de profilé (1) et des ailes de profilé (4, 5) latérales qui s'étendent à partir de celui-ci et sont liées à celui-ci et la règle (2) étant disposée entre lesdites ailes, **caractérisé en ce que** les ailes de profilé (4, 5) sont en un matériau élastique et que le fond de profilé (1) est en un matériau stable dans la direction longitudinale, flexible.

2. Dispositif selon la revendication 1, **caractérisé en ce que** le matériau stable dans la direction longitudinale du fond de profilé (1) est une bande de métal.

3. Dispositif selon la revendication 1 ou 2, **caractérisé en ce que** les ailes de profilé (4, 5) comportent des lamelles d'étanchéité élastiques.

4. Dispositif selon une des revendications 1 à 3, **caractérisé en ce que** les ailes de profilé (4, 5) sont liées au fond de profilé (1) au moyen d'un film auto-adhésif.

5. Dispositif selon une des revendications 1 à 4, **caractérisé en ce que** les ailes de profilé (4, 5) et le fond de profilé (1) sont entourés de lamelles d'étanchéité (6) élastiques.

6. Dispositif selon une des revendications 1 à 5, **caractérisé en ce que** la raideur, en tant que produit du module d'élasticité et du moment d'inertie, des ailes de profilé (4, 5) et du fond de profilé (1) est calculée en fonction d'un rayon d'enroulement r.

7. Dispositif selon une des revendications précédentes, **caractérisé en ce que** la règle (2) repose sur le fond de profilé par une couche intermédiaire (3) agencée sous forme de couche d'adhésif élastique ou sous forme de film d'huile.

8. Dispositif selon une des revendications précédentes, **caractérisé en ce que** les ailes de profilé (4, 5) et le fond de profilé (1) ont une raideur qui permet un enroulement sur un corps de base avec un rayon r de 20 à 40 cm.
